Europäisches Patentamt

European Patent Office

Office européen des brevets

(11) Veröffentlichungsnummer: **0 149 226**
**B1**

(12) **EUROPÄISCHE PATENTSCHRIFT**

(45) Veröffentlichungstag der Patentschrift:
20.05.87

(21) Anmeldenummer: **84116192.0**

(22) Anmeldetag: **22.12.84**

(51) Int. Cl.⁴: **C 09 K 17/00**

(54) **Behandlungsmittel für übersäuerte Böden.**

(30) Priorität: **03.01.84 DE 3400080**

(43) Veröffentlichungstag der Anmeldung:
**24.07.85 Patentblatt 85/30**

(45) Bekanntmachung des Hinweises auf die Patenterteilung:
**20.05.87 Patentblatt 87/21**

(84) Benannte Vertragsstaaten:
**AT CH DE FR GB LI SE**

(56) Entgegenhaltungen:
**DE-A-2 725 687**
**US-A-2 779 670**

**PATENTS ABSTRACTS OF JAPAN, Band 8, Nr. 93 (C-220) 1530 , 27. April 1984 & JP-A-598766**

(73) Patentinhaber: **Wagner, Herbert Hans, Berliner Allee 54, D-8900 Augsburg (DE)**

(72) Erfinder: **Wagner, Herbert Hans, Berliner Allee 54, D-8900 Augsburg (DE)**

(74) Vertreter: **Liebau, Gerhard, Dipl.- Ing., Birkenstrasse 39, D-8900 Augsburg 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Behandlungsmittel für übersäuerte Böden, insbesondere Waldböden, bestehend aus einem Granulat eines porösen, anorganischen Stoffes, das mit einer Lösung eines Wirkstoffes für die Verbesserung der Bodenbeschaffenheit getränkt ist.

Es ist bekannt, daß durch den sogenannten sauren Regen, der durch Luftverschmutzung entsteht, Böden übersäuert werden, was bei Waldböden zu einer Schädigung und häufig auch zu einem Absterben der Bäume führt. Bisherige Versuche, dem Problem der übersäuerten Waldböden durch großflächige Kalkung und Düngung oder das Besprühen der Baumnadeln mit Magnesiumsulfat beizukommen, können nur bedingt erfolgreich sein, da durch derartige Maßnahmen das komplizierte Symbiosesystem Pilze-Wurzeln gestört wird oder nicht mehr funktioniert. Auch sind die bisherigen Behandlungsmittel und Methoden meist zu teuer in der Herstellung bzw. Anwendung.

Die US-A-2 779 670 offenbart ein Behandlungsmittel für Böden, bei welchem poröse Granulate, wie expandierte Perlite, als Träger für Wirkstoffe für landwirtschaftliche Zwecke bzw. für die Verbesserung der Bodenbeschaffenheit des Erdbodens verwendet werden. Die porösen Träger werden dabei mit einer Lösung der Wirkstoffe getränkt, wonach die Wirkstoffe durch Trocknen in den Poren der Träger fixiert werden. Durch die Porosität der Träger lösen sich die Wirkstoffe, die die Träger enthalten, nur langsam aber kontinuierlich in den Böden auf, ohne daß eine hohe Dosierung des Wirkstoffes direkt aktiv werden kann.

Der Erfindung liegt die Aufgabe zugrunde ein Behandlungsmittel für Böden, insbesondere Waldböden, der eingangs erwähnten Art zu schaffen, das speziell zur Behandlung übersäuerter Böden geeignet ist und dabei billig in der Herstellung und einfach in der Anwendung ist und langzeitig wirkt.

Dies wird nach der Erfindung dadurch erreicht, daß das Granulat zur Behandlung übersäuerter Böden mit einer Wasserglaslösung (Natrium- und/oder Kaliumsilikat-Lösung) getränkt ist.

Die Erfindung geht also von dem Gedanken aus, ein stark alkalisch wirkendes Mittel in einen körnigen, porösen Stoff einzulagern, der auf den zu behandelnden Böden ausgestreut wird und dann unter Witterungseinflüssen langsam von dem porösen Stoff an den zu behandelnden Boden abgegeben wird.

Wasserglas ist ebenso wie ein poröses, anorganisches Granulat ein verhältnismäßig billiger Grundstoff. Da die Herstellung des neuen Behandlungsmittels durch einfaches Vermischen von Wasserglas und dem Granulat des porösen Stoffes erfolgen kann, ist es billig in der Herstellung. Das Ausstreuen des Granulates ist relativ unkompliziert. Es kann bei Waldbegehung erfolgen, wobei auch die Dosierung einfach ist. Das mit Wasserglas getränkte Granulat wird im Wurzelbereich der Bäume ausgestreut, wobei eine verhältnismäßig geringe Menge ausreichend ist. Das Granulat muß nicht in den Boden eingearbeitet werden. Durch Regen und/oder Feuchtigkeit des Waldbodens wird das Granulat aktiviert. Der poröse Stoff gibt langsam Wasserglas ab. Kommt Wasserglas mit der im Boden enthaltenen verdünnten Säure in Berührung, so findet eine gallertartige Ausflockung von Kieselsäure statt. Durch die langsame Freigabe des Wasserglas wird eine zu hohe Dosierung und deren schädliche Nebenwirkungen vermieden. Außerdem wird auch eine langzeitige Wirkung des Behandlungsmittels sichergestellt. Durch die alkalische Wirkung von Wasserglas wird die Übersäuerung des Waldbodens beseitigt. Die entstehende Kieselsäure begünstigt das Wachstum der Bodenpilze (Mykorrhizapilze) und der Bäume.

Bei dieser Pilzsymbiose erhält der Pilz von den Bäumen die mittels Fotosynthese aus Wasser und Kohlendioxyd hergestellten Kohlenhydrate und andere Stoffwechselprodukte. Durch das die Wurzeln der Bäume umgebende Pilzgeflecht wird die Fähigkeit der Wurzeln zur Wasser- und Mineralstoffaufnahme verbessert. Mykorrhizapilze sorgen für eine erhöhte Stoffwechseltätigkeit und ein schnelleres Höhenwachstum der Bäume. Diese Pilze erhöhen auch die Aufnahme von Phosphat, Zink, Kalium, Kupfer aus dem Boden, sowie die Nitratabsorption.

Das Granulat kann eine Korngröße bis zu 10 mm, vorzugsweise jedoch eine Korngröße von 1 - 5 mm aufweisen.

Vorteilhaft ist der poröse Stoff ein Mineralstoff.

Zweckmäßig ist der poröse Stoff expandiertes Perlite. Dieses ist porös und hochsaugend und deshalb als Trägermaterial für das Wasserglas besonders geeignet. Perlite zersetzt sich mit der Zeit sehr langsam und enthält wichtige Mineralaufbaustoffe für Pilze, für den Stoffwechsel der Bäume und den Zellaufbau aller Pflanzen.

Der poröse Stoff kann vorteilhaft auch Calciumsilikat, insbesondere gemahlener Porenbeton sein. Bei der Herstellung von Porenbeton, z.B. Gasbeton, entstehen Abfälle. Werden diese Abfälle gemahlen, so kann man das entstehende Granulat mit großem Vorteil für die Einlagerung von Wasserglaslösung verwenden, denn gemahlener Porenbeton, insbesondere Gasbeton, weist eine hohe Aufnahmefähigkeit hierfür auf. Außerdem ist gemahlener Gasbeton ein verhältnismäßig billiges Produkt, wobei man durch geeignete Wahl der Grundstoffe und der Behandlungsmethoden bei der Herstellung von Gasbeton die Porengröße und damit auch die Flüssigkeitaufnahmefähigkeit steigern kann.

Als poröser Stoff kann auch der in der Natur vorkommende Bimsstein verwendet werden.

Vorzugsweise wird das Granulat aus porösem Stoff bis zur Sättigung mit Wasserglas getränkt und anschließend mit einem Füllstoff ummantelt. Die Tränkung bis zur Sättigung erfolgt dadurch, daß man den porösen Stoff in die Wasserglaslösung einschüttet. Nachdem überflüssige Wasserglaslösung durch Abtropfen oder dgl. entfernt wurde, wird das Granulat mit dem Füllstoff ummantelt, um es in einen streufähigen Zustand zu bringen.

Dabei ist es vorteilhaft, wenn die Ummantelung aus einem alkalisch reagierenden Pulver besteht.

Besonders zweckmäßig ist es, wenn die Ummantelung aus Magnesiumhydrogencarbonet besteht. Wird des so ummantelte Granulat auf den Waldboden aufgebracht, so löst es sich in einem übersäuerten Boden relativ schnell und kann seine alkalische Wirkung entfalten. In Bereichen mit normalen Bodenwerten löst sich des Magnesiumhydrogencarbonat hingegen nur schwer. Es werden nur geringe Mengen hiervon an den Boden abgegeben und auch die Abgabe von Wasserglas wird denn stark verzogert. Hierdurch erhält der Waldboden immer nur diejenigen Mengen an Behandlungsmitteln die tatsächlich benötigt werden. Zusätzlich enthält Magnesiumhydrogencarbonat auch noch mindestens 20% freies Magnesium, welches das Pflanzenwachstum begünstigt (Entgiftung des Waldbodens).

Die Ummantelung kann auch entgiftende Zusatzstoffe und/ oder milde Dungemittel enthalten.

So kann die Ummantelung Trikaliumphosphat enthalten. Dieses dreibasische Phosphorsäure Kalium dient als spezieller Dünger für Pilze und Bäume und führt dem Boden wohldosiert wichtiges Kalium und Phosphor in leicht aufnehmbarer Form zu.

Ferner kann die Ummantelung auch Ferrimononatrium EDTA enthalten. Dies ist ein wichtiger Komplexbildner, er bindet schädliche Schwermetalle wie z.B. Cadmium, Blei, Nickel. Ferrimononatrium EDTA beseitigt weiterhin Eisenmangel der Pilze und Baume fordert sehr stark die Chlorophyllbildung aller Pflanzen vermehrt den Sauerstofftransport im Zellgefuge und regt den Stoffwechsel der Bäume an.

Das mit Wasserglaslösung getränkte Granulat kann mit einem Gemisch aus Magnesiumhydrogencarbonat, Trikaliumphosphat und Ferrimononatrium EDTA ummantelt werden. Als Beispiel wird folgende Rezeptur angegeben

| 5000 | cm³ | expandiertea Perlite |
| 1000 | ml | Natriumailikat |
| 250 | g | Magneaiumhydrogencarbonat (leicht) |
| 50 | g | Trikaliumphoaphat |
| 5 | g | Ferrimononatrium EDTA |

Diese Rezeptur enthält hauptsächlich akzessorische Nahrstoffe fur Pilze. Das Behandlungsmittel ist in seiner ganzen Zuaammensetzung ungiftig. Es müssen auch beim Ausbringen des Granulats keine Schutzhandschuhe oder Schutzbrillen getragen werden. Fur Bodenpflanzen wie z.B. Farne, Moose, Flechten ist das erfindungsgemaße Behandlungsmittel ebenfalls unbedenklich.

Mit dem erfindungagemäßen Behandlungsmittel konnen nicht nur übersäuerte Waldböden, sondern auch andere Böden, wie Wiesen und Acker behandelt werden. Gegenbenenfalls kann das Behandlungsmittel auch zur Behandlung von übersäuerten Gewässern, beispielsweise als Algenregulativ eingesetzt werden. Bei Verwendung von Perlite oder Porenbeton ist das Behandlungsmittel teilweise schwimmfähig, was zu einer gleichmaßigen Verteilung der Wirkstoffe beiträgt. Allerdings sollte das Behandlungsmittel wenn es zur Behandlung von Gewässern verwendet wird kein Trikaliumphosphat enthalten. Behandlungsmittel für Gewässer wird vorzugsweise mit etwas Methylenblau als Vitalfarbstoff eingefärbt. Das Behandlungsmittel trübt das Wasser nicht.

## Patentansprüche

1. Behandlungsmittel für Böden insbesondere Waldböden bestehend aus einem Granulat eines porosen, anorganischen Stoffes das mit einer Lösung eines Wirkstoffes für die Verbesserung der Bodenbeschaffenheit getränkt ist, dadurch gekennzeichnet daß das Granulat zur Behandlung übersäuerter Böden mit einer Wasserglaslösung (Natriumund/oder Kaliumsilikat-Lösung) getränkt ist.

2. Behandlungsmittel nach Anspruch 1, dadurch gekennzeichnet, daß das Granulat eine Korngröße bis zu etwa 10 mm, vorzugsweise 1 - 5 mm aufweist.

3. Behandlungsmittel nach Anspruch 1 oder 2 dadurch gekennzeichnet, daß der poröse Stoff ein Mineralstoff ist.

4. Behandlungsmittel nach Anspruch 3, dadurch gekennzeichnet, daß der poröse Stoff expandiertes Perlite ist.

5. Behandlungsmittel nach Anspruch 3, dadurch gekennzeichnet, daß der poröse Stoff Calziumsilikat, insbesondere gemahlener Porenbeton ist.

6. Behandlungsmittel nach Anspruch 3, dadurch gekennzeichnet, daß der poröse Stoff Bimsstein ist.

7. Behandlungsmittel nach mindestens einem der Ansprüche 1 - 6, dadurch gekennzeichnet daß das Granulat aus porosem Stoff bis zur Sättigung mit Wasserglas getränkt und mit einem Füllstoff ummantelt ist.

8. Behandlungsmittel nach Anspruch 7, dadurch gekennzeichnet, daß die Ummantelung aus einem alkalisch regulierenden Pulver besteht.

9. Behandlungsmittel nach Anspruch 7 oder 8, dadurch gekennzeichnet, daß die Ummantelung aus Magnesiumhydrogencarbonat besteht.

10. Behandlungsmittel nach Anspruch 7, dadurch gekennzeichnet, daß die Ummantelung entgiftende Zusatzstoffe und/oder milde Düngemittel enthält.

11. Behandlungsmittel nach Anspruch 10, dadurch gekennzeichnet, daß die Ummantelung Trikaliumphosphat enthält.

12. Behandlungsmittel nach Anspruch 10, dadurch gekennzeichnet, daß die Ummantelung Ferrimononatrium EDTA enthält.


**Claims**

1. Agent for treatment of soils, in particular for forest soils, consisting of granulates of a porous, inorganic material being saturated with a solution of an effective substance for the improvement of the composition of the soil characterized in that for treatment of overacidified soils the granulates are saturated with a solution of water-glass (solution of sodium silicate and/or potassium silicate).

2. Agent according to claim 1 characterized in that the granulates have a grain size up to about 10 mm, preferably 1 to 5 mm.

3. Agent according to claim 1 or 2 characterized in that the porous material is a mineral material.

4. Agent according to claim 3 characterized in that the porous material is expanded perlite.

5. Agent according to claim 3 characterized in that the porous material is calcium silicate, in particular crushed cellular concrete.

6. Agent according to claim 3 characterized in that the porous material is pumice.

7. Agent according to at least one of the claims 1 to 6 characterized in that the granulates are saturated with water-glass until saturation and are covered with a filler.

8. Agent according to claim 7 characterized in that the cover consists of an alkaline regulating powder.

9. Agent according to claim 7 or 8 characterized in that the cover consists of magnesium hydrogen carbonate.

10. Agent according to claim 7 characterized in that the cover contains decontaminating addition agents and/ or mild fertilizers.

11. Agent according to claim 10 characterized in that the cover contains tripotassium phosphate.

12. Agent according to claim 10 characterized in that the cover contains ethylenedinitrilo-tetraacetic acid EDTA.


**Revendications**

1. Produit de traitement pour sols, en particulier pour sols forestiers, constitué par un granulat d'une matière inorganique poreuse qui est imprégné d'une solution d'une matière active pour l'amélioration de la nature du sol, caractérisé par le fait que le granulat pour le traitement des sols hyper acidifiés est imprégné d'une solution de verre soluble (solution de silicate de sodium et/ou de potassium).

2. Produit de traitement selon la revendication 1, caractérisé par le fait que le granulat a une grosseur de grains allant jusqu'à environ 10 mm, de préférence de 1-5 mm.

3. Produit de traitement selon la revendication 1 ou 2, caractérisé par le fait que la matière poreuse est une matière minérale.

4. Produit de traitement selon la revendication 3, caractérisé par le fait que la matière poreuse est de la perlite expansée.

5. Produit de traitement selon la revendication 3, caractérisé par le fait que la matière poreuse est du silicate de calcium, en particulier du béton poreux broyé.

6. Produit de traitement selon la revendication 3, caractérisé par le fait que la matière poreuse est de la pierre ponce.

7. Produit de traitement selon au moins l'une des revendications 1-6, caractérisé par le fait que le granulat en matière poreuse est imprégné de verre soluble jusqu'à la saturation et est enrobé d'une matière de remplissage.

8. Produit de traitement selon la revendication 7, caractérisé par le fait que l'enrobage est constitué par une poudre à action alcaline.

9. Produit de traitement selon la revendication 7 ou 8, caractérisé par le fait que l'enrobage est constitué par de l'hydrogénocarbonate de magnésium.

10. Produit de traitement selon la revendication 7, caractérisé par le fait que l'enrobage contient des additifs décontaminants et/ou des substances fertilisantes douces.

11. Produit de traitement selon la revendication 10, caractérisé par le fait que l'enrobage contient du phosphate de potassium.

12. Produit de traitement selon la revendication 10, caractérisé par le fait que l'enrobage contient du sel ferrique monosodique d'EDTA.